# EUROPEAN PATENT SPECIFICATION

(11) **EP 1 742 857 B1**
(45) Date of publication and mention of the grant of the patent: **27.07.2016**
(21) Application number: 05738226.9
(22) Date of filing: 27.04.2005
(51) Int. Cl.: B65G 53/24, B65G 53/28

(54) **A METHOD AND AN APPARATUS FOR CONVEYING PARTICULATE MATERIAL**
VERFAHREN UND VORRICHTUNG ZUR FÖRDERUNG VON TEILCHENFÖRMIGEM MATERIAL
APPAREIL ET PROCEDE DE TRANSPORT DE MATIERES

(30) Priority: 27.04.2004 GB 0409318
(43) Date of publication of application: 17.01.2007
(60) Divisional application: 11166105.4
(73) Proprietor: HALLIBURTON ENERGY SERVICES, INC., Duncan, OK 73536-0440 (US)
(72) Inventor: MORRIS, Ronald, George, Montrose,Angus DD10 8SR (GB)
(74) Representative: Brown, James Douglas
(86) International application number: PCT/GB2005/001606
(87) International publication number: WO 2005/102883

(56) References cited:
- WO-A-00/55073
- CA-A1- 2 299 951
- DE-A1- 2 437 799
- GB-A- 2 087 335
- GB-A- 2 096 965
- US-A- 3 616 599
- US-A- 4 695 205
- US-A1- 2002 187 012

## Description

The present invention relates to apparatus and a method for transporting material, and particularly but not exclusively relates to apparatus and a method for transporting non free flowing or relatively sticky paste-like materials such as those produced by hydrocarbon exploration and production operations.

In the hydrocarbon exploration and production industry it is often necessary to transfer large quantities of material from, for example, a drill rig to a transport vessel in order that the material can then be transported to an on-shore location for further processing/disposal. The materials used in/created by drilling operations such as drill cuttings, pastes or sludge are often highly viscous substances which are therefore difficult to transport due to their cohesive properties. One way of transporting such materials is to empty them into a container or skip and then transport the container or skip onto a vessel; however manoeuvring the container or skip around the rig, as required in such a method, presents a number of dangers to personnel operating on the rig.

In order to transfer drill cuttings from the rig to the vessel more safely it is known to transfer the drill cuttings firstly to a number of large holding tanks. When the holding tanks are full, they are connected via tubing to transport tanks on board a transport vessel and transferred thereto using compressed air or a similar propellant in order to assist progression of the material along the tubing; however such systems can become blocked due to the difficulty in obtaining a large enough pressure differential along the long distance of tubing between the rig and the vessel. The tendency for highly viscous materials to stick together rather than to flow, combined with the fact that the long tubing has a tendency to sag thereby creating certain areas along the pipe where the flow of the highly viscous materials must act against gravity, makes blockages along the pipe more likely.

For instance, European Patent Publication number 1187783 discloses a method of transferring drill cuttings from a container 25 on boat 23 to a container 61 at an elevated position as comprising moving the drill cuttings from container 25 to container 61 by applying pressurised gas to the top of the drill cuttings to cause them to flow out.

Also, Canadian Patent Publication No CA2299951 discloses a method and apparatus for handling and disposal of oil and gas well drill cuttings and which uses for example a vacuum unit 22 to draw drill cuttings from tanks 26, 27, 28, 29 located on a rig through a flow line 24 into tanks 103 located on a boat and where that vacuum unit 22 is then used to further draw the drill cuttings from the tanks 103 into a cuttings grinder unit 108.

Also, US Patent No 3619599 discloses using a vacuum tank 10 to draw gas entrained mud from a tank 40, 45 through an inlet conduit 14 such that once the gas and trained mud is located within the vacuum tank 10, the gas is separated from the mud.

According to the present invention there is provided a method of transferring drill cuttings into a first container containing fluid from a second container located upstream of the first container comprising the steps of:-
increasing the pressure within the second container such that the increased pressure applied upstream of the drill cuttings acts on and expels the drill cuttings within the second container such that the drill cuttings are pumped from the second container through a first conduit and into the first container; and characterised by
simultaneously at least partially evacuating fluid from within the first container in order to facilitate progression of the drill cuttings from the second container into the first container and wherein the pressure applied to the second container combined with evacuating the fluid from the first container provides a pressure differential across the drill cuttings travelling along the length of the first conduit.

Preferably, the transfer of drill cuttings from the second container to the first container and evacuating the fluid from the first container are performed substantially simultaneously.

Preferably, the fluid is gaseous and is more preferably air, and the method further comprises the step of at least partially evacuating the fluid from the first container along a second conduit in order to substantially create a vacuum within the first container.

Preferably, the fluid is at least partially evacuated from the first container whilst substantially avoiding removal of the drill cuttings from the container.

The second upstream container typically provides a temporary storage facility for drill cuttings to be transported.

Typically, the method further comprises the step of providing a first pumping means for pumping drill cuttings which may be from a source of drill cuttings into the second container under pressure such that the drill cuttings may be deposited in the second container prior to being transferred to the first container. More preferably, pressure is applied to the second container and the drill cuttings therein when the second container contains a desired level of drill cuttings. More preferably, the second container is then emptied by evacuating at least a portion of the drill cuttings within the second container, typically along a discharge conduit, which action is preferably assisted by the pressure applied to the second container.

Preferably, the discharge conduit is in fluid communication with the first conduit via an intermediate or transfer pumping and/or vacuum generation means in order to allow the drill cuttings from the second container to be conveyed to the first container.

Typically, the first container is located on a transportation means such as a sea going vessel and the second container is located proximal to the first pumping means and also is preferably located proximal to a supply of the drill cuttings such as a primary drill cuttings source such as on a drilling rig. Preferably, the intermediate or transfer pumping and/or vacuum generation means is located proximal to and downstream of the second container. Typically, a transfer conduit connects the intermediate or transfer pumping and/or vacuum generation means to the first container.

According to the present invention there is provided drill cutting transfer apparatus comprising:-
a first container containing fluid;
a second container which contains pressurised drill cuttings and is located upstream from the first container;
a first conduit connecting the first container and the second container;
drill cutting pumping means adapted to pressurise the drill cuttings within the second container such that the drill cuttings are pumped from the second container through the first conduit and into the first container;
and characterised by further comprising drill cutting urging means adapted to facilitate transfer of the drill cuttings from the first location to the second location by at least partially evacuating fluid from within the first container simultaneously with the operation of the drill cutting pumping means, such that the pressure applied to the second container by the drill cutting pumping means simultaneously combined with evacuating the fluid from the first container provides a pressure differential across the drill cuttings travelling along the length of the first conduit.

Preferably, the intermediate or transfer pumping and/or vacuum generation means comprises a pump and a vacuum device and is adapted to be selectively switched between the pumping and vacuum producing modes as desired.

Preferably, the intermediate or transfer pumping and/or vacuum generation means also comprises an intermediate storage tank and is typically located upstream of the container.

Preferably, the drill cuttings urging means comprises a second tubular conduit which passes through an outlet portion of the container and more preferably further comprises vacuum generation means connected thereto.

Preferably, the inlet and outlet portions are spaced apart across a diameter of the first container in order to prevent drill cuttings exiting the inlet portion from entering the outlet portion. Optionally, a filter may also be provided on the outlet portion to further prevent the drill cuttings from entering the outlet portion and hence the vacuum generation means. Typically, the inlet and outlet portions are located toward the upper end of the first container.

Typically, the fluid is gaseous and preferably is air.

Typically, the drill cuttings are a highly viscous hydrocarbon exploration and production industry by-product.

Embodiments of the invention have the advantage that they allow drill cuttings to be pumped by the intermediate or transfer pumping and/or vacuum generation means along the first conduit until it is expelled into the container from the inlet portion on the first conduit. The progression of the drill cuttings along the first conduit and into the container is eased and/or assisted by the simultaneous substantial vacuum provided across the diameter of the container as provided by the second conduit and the vacuum generation means.

Preferably, the second container is further preferably located upstream from the intermediate or transfer pumping and/or vacuum generation means. Typically, the second container is connected to the first container such that drill cuttings may be transferred therebetween. More preferably, the connection between the first and second containers passes through at least a portion of the intermediate or transfer pumping and/or vacuum generation means.

This allows a small amount (limited by the maximum volume of the intermediate or transfer pumping and/or vacuum generation means) of drill cuttings to be sucked by the vacuum of the intermediate or transfer pumping and/or vacuum generation means from the second container and into an intermediate storage tank of the intermediate or transfer pumping and/or vacuum generation means. The pressurised contents of the second container typically assist in this regard by providing a positive pressure differential from the inside of the second container to the outside. When the intermediate storage tank is full the intermediate or transfer pumping and/or vacuum generation means is then switched either manually or automatically to its pumping mode in order to pump the contents of the intermediate storage tank into the first container (which is assisted by the vacuum produced in the first container by the second conduit and vacuum generation means).

Typically, the first and/or second containers are large, silo-type containers which are typically cylindrical in shape. Preferably, the or each container is provided with a plurality of circumferentially arranged drill cuttings chutes, preferably having a multi-sided (which in preferred embodiments is hexagonal) cross section, adapted to substantially prevent the drill cuttings within the or each container from becoming compacted such that the drill cuttings will no longer flow. Preferably, a separation device, which is preferably a cone having a multisided (which in preferred embodiments is hexagonal) cross section, is provided adjacent the chutes in order to substantially prevent large lumps of drill cuttings from settling within the chutes. Alternatively, a standard conically shaped silo chute may be provided on the or each container.

An embodiment of the present invention will now be described with reference to the accompanying drawings, in which:-
Fig. 1 is a schematic diagram showing the flow of drill cuttings through apparatus in accordance with the present invention;
Fig. 2A is a schematic front view diagram of a tank used in the apparatus of Fig. 1;
Fig. 2B is a plan view of the top of the tank of Fig. 2A looking in the direction indicated by the reference lines B-B;
Fig. 2C is a partial cross-sectional side elevation of the tank of Fig. 2A;
Fig. 2D is a cross-sectional view of the valve arrangement on the bottom of the tank of Fig. 2A taken through the line C-C;
Fig. 2E is a partial cross-sectional view of the tank of Fig. 2C looking in the direction indicated by reference line D; and
Fig. 2F is a cross-sectional view of the tank of Fig. 2E taken through the line E-E showing the hexagonal chute and cone arrangement used in conjunction with a preferred embodiment of the apparatus.

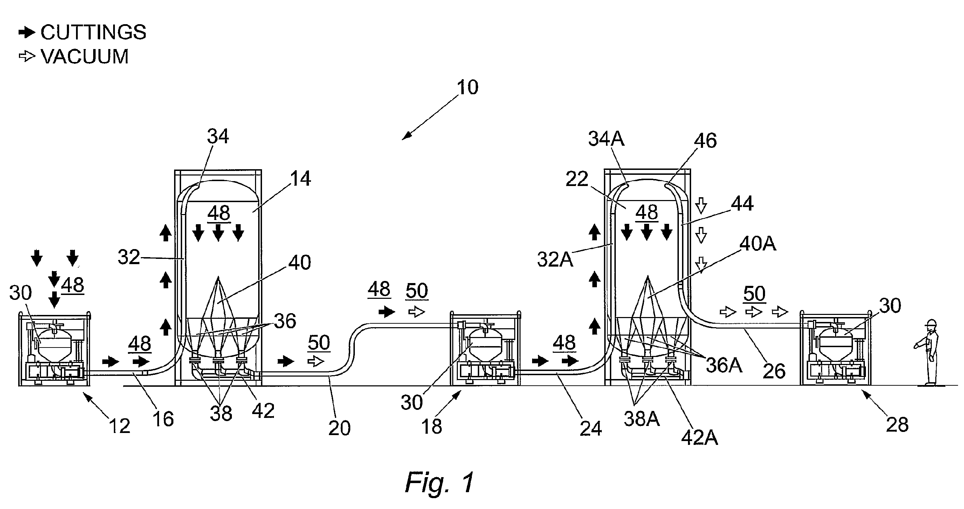

Referring to Fig. 1, drill cutting material transportation apparatus 10 is provided. The apparatus 10 has a first vacuum/pump unit 12 connected to a holding tank 14 by a holding tank input pipe 16. The holding tank 14 is connected to a second vacuum/pump unit 18 by a holding tank output pipe 20. The second vacuum/pump unit 18 also connects to a transportation tank 22 via a transfer pipe 24. A vacuum pipe 26 connects to a third vacuum/pump unit 28 and is in fluid communication with the inside of the transportation tank 22.

The vacuum/pump units 12, 18, 28 can be selectively switched between a vacuum mode which sucks material into an integrated transfer tank 30 and a pumping mode which blows material out of the integrated transfer tank 30 under pressure. The pressure differential required for both the vacuum and pumping modes is provided by an air compressor (not shown) attached to or integrated with the units 12, 18, 28. An example of a preferred unit 12, 18, 28 able to provide such pumping and vacuum capabilities is the SUPAVAC™ system distributed worldwide for the oil and gas industry by ITS Drilling Services Limited of Aberdeen, UK, but the skilled reader will realise that other conventional vacuum/pump units may also be suitable although such other conventional vacuum/pump units may not operate as quickly nor as efficiently.
The holding tank 14 and transportation tank 22 are large cylindrical tanks 14, 22 which are able to hold a relatively large volume of material. Typically, the holding tank 14 and transportation tank 22 are each able to hold around 15m³ to 20m³ of material, though it should be noted that smaller or larger tanks could be used without affecting the overall operation of the apparatus 10.

The holding tank 14 is provided with an external upright pipe 32 which extends from the bottom of the tank 14 to the roof of the tank 14 at which point it terminates with an aperture 34, such that the interior of the external upright pipe 32 is in fluid communication with the interior of the holding tank 14. The bottom of the external upright pipe 32 is connected to the first vacuum unit 12 by the holding tank input pipe 16. Though the upright pipe 32 is provided externally in the apparatus 10 shown in the Figures, it should be appreciated that this upright pipe may alternatively be provided internally.

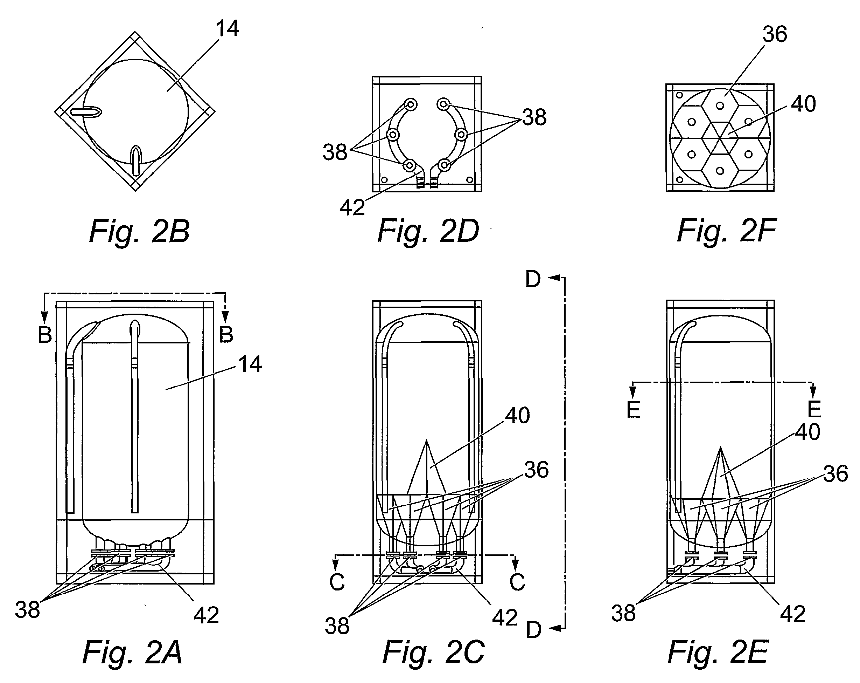

The bottom of the holding tank 14 may simply have a standard flat or conically shaped exit chute connected to outlet valves; however in the present and preferred embodiment (as best seen in Figs. 2C, 2E and 2F) a number of hexagonal chutes 36 are provided around the circumference of the tank 14 bottom in a honeycomb arrangement. A cone 40 having a hexagonal cross section is also provided in the centre of the circumferentially arranged hexagonal chutes 36, the purpose of which will be described subsequently. A suitable honeycomb shaped insert 36 is described in PCT Application No WO 00/55073.

The lowermost point of each chute 36 is provided with an outlet discharge valve 38 connected to discharge tubes 42 which converge onto the end of the holding tank output pipe 20.

A substantial number of components on the transportation tank 22 are substantially the same as the holding tank 14 and will therefore not be described further. In the following description, where this applies the same reference numeral has been used with an additional A being suffixed to the reference numeral.

Unlike the holding tank 14, the discharge tubes 42A of the transportation tank 22 are not connected to an output pipe in the arrangement shown in Fig. 1. In addition however, a further external upright pipe 44 is provided for the tank 22 opposite the external inlet upright pipe 32A. A vacuum pipe inlet aperture 46 is provided on the upper end of the additional external upright pipe 44, the purpose of which will be described subsequently. The additional external upright pipe 44 extends downwardly from the vacuum pipe inlet aperture 46 and connects to the vacuum pipe 26 which leads on to the third vacuum unit 28.

It should be noted that the length of the pipes 16, 20, 24, 26 in Fig. 1 are not to scale and have been altered for clarity. Indeed the transfer pipe 24 must be long enough to allow material to be transported from the vacuum unit 18 adjacent the holding tank 14 located on the rig (not shown) to the transportation tank located on the supply vessel (not shown) and this distance is likely to vary in length per application or project, typically from 10m to 200m in length.

In the following description the flow of drill cuttings throughout the apparatus 10 is illustrated by dark shaded arrows 48 on Fig. 1 and the negative suction (or vacuum) pressure differential created by the vacuum units 12, 18, 28 is illustrated by the unshaded arrows 50.

In operation, the vacuum mode of the first vacuum unit 12 is switched on. This creates a vacuum in the tank 30 which sucks drill cuttings 48 into the tank 30. It should be noted that the drill cuttings 48 are initially output from a primary drill cutting treatment equipment such as shale shaker/centrifuge etc. such as those typically used in drilling operations. The vacuum in the transfer tank 30 is sustained until the transfer tank 30 is filled with drill cuttings 48 which typically occurs when around 400 litres are contained within the tank 30. When full, the transfer tank 30 can no longer suck drill cuttings 48 and must now be emptied.

In order to empty the tank 30, the first vacuum unit 12 is switched to its pumping mode. In its pumping mode, compressed air is introduced into the tank 30 by the compressor (not shown). The increased pressure within the tank 30 expels the drill cuttings 48 within the tank 30 into the holding tank input pipe 16. The drill cuttings 48 are progressed up the upright pipe 32 due to pressure of compressed air in the tank 30 acting upon them until they reach the internal inlet aperture 34, at which point the drill cuttings 48 enter the holding tank 14. Gravity causes the drill cuttings 48 to fall toward the bottom of the tank 14 and in so doing begins to fill the holding tank 14 from the bottom upwards.

Once the first vacuum unit 12 has expelled the contents of its tank 30 into the holding tank 14, it is then switched back to vacuum mode (either automatically or by a manual operator) in order to refill with drill cuttings 48 from the shale shaker/ centrifuge, etc. on the rig platform (not shown). Once filled with the next load of drill cuttings 48 the first vacuum unit 12 empties its contents into the tank 14 in a similar fashion as previously described. This cyclical filling and emptying of the tank 30 is repeated by the first vacuum unit 12 until the holding tank 14 is filled to a desired level determined by the user. The weight, and hence volume, of material within the holding tank 14 can be calculated by the user by subtracting the known empty weight of the holding tank 14 from the total weight of the holding tank 14 in operation whilst taking into account the effect of the specific gravity of the material (when calculating the volume).

It should be noted that the vacuum units 12, 18, 28 have very few moving parts e.g. impellers etc. since these could be easily clogged up by the highly viscous material passing through the units. Instead, the vacuum units 12, 18, 28 mainly comprise chambers and valves (not shown) which, in conjunction with the compressed air supply can be manipulated to provide the necessary vacuum or pumping action as required.

Though a single holding tank 14 is shown in Fig. 1, in order to increase the capacity of the rig for retaining drill cuttings 48 before they must be offloaded, the rig may have a number of holding tanks 14. A typical number of holding tanks on the rig would be between 1 and 8 though more could be provided if the rig structure permits. When a number of holding tanks 14 are provided, the input pipe 16 is simply detached when the holding tank 14 to which it is connected is full, and is then reconnected to an empty holding tank 14.

When it is desired to transfer the contents of the holding tank 14 to, for example, a sea going supply vessel (not shown), one end of the holding tank output pipe 20 is connected to the discharge tubes 42 of the holding tank 14 to be emptied. The other end of the holding tank output pipe 20 is connected to the inlet of the second vacuum unit 18. The remaining space within the top of the holding tank 14 is then pressurised (while the discharge valves 38 are closed) either using an additional pressure source such as a pneumatic pump or the air compressor or using the first vacuum unit 12 in its pump mode. This pressurised zone results in the contents of the holding tank 14 being urged towards the bottom of the tank 14. The discharge valves 38 on the bottom of the holding tank 14 are then opened and the tank 30 on the second vacuum unit 18 is then filled by creating a vacuum in the tank 30 in a similar way to that previously described for the first vacuum unit 30. The vacuum 50 created along the output pipe 20 by the second vacuum unit 18 (combined with the pressure exerted on the drill cuttings 48 within the holding tank 14 by the pressurised zone) draws the drill cuttings 48 from the holding tank 14. When the tank 30 on the second vacuum unit 18 is filled with drill cuttings 48, the vacuum unit is switched off in preparation for pumping the drill cuttings 48 into the transportation tank 22 located on, for example, the supply vessel. A number of these transportation tanks 22 may be provided on the supply vessel e.g. from 1 to 20 tanks in order to maximise the drill cutting transport capacity of the supply vessel.

When the unit 18 is switched to pumping mode it begins to pump the drill cuttings 48 along the transfer pipe 24 by introducing compressed air into the tank 30. While the drill cuttings 48 are being pumped along the transfer pipe 24, the third vacuum unit 28 simultaneously operates in its vacuum mode in order to create a vacuum along the vacuum pipe 26. The vacuum present in the vacuum pipe 26 is communicated to the inside of the transportation tank 22 due to the open end of the vacuum pipe 26 provided by the vacuum pipe inlet aperture 46. The effect of the pumping action provided by the second vacuum unit 18 combined with the vacuum created in the transportation tank 22 provides a large pressure differential across the drill cuttings 48 travelling along the length of the transfer pipe 24. The magnitude of this pressure differential is substantially greater than that obtainable by only performing one of the pumping or sucking operations and is ideally suited to ensuring that the viscous material e.g. drill cuttings (which have a tendency to stick together and block pipes components) continue to flow through the apparatus 10. This is even true over the relatively long distance required to transfer the drill cuttings 48 (through the transfer pipe 24) from the rig platform to the supply vessel.

When the drill cuttings 48 reach the internal inlet aperture 34A they escape into the transportation tank 22 and fall under the action of gravity toward the bottom of the tank 22. It should be noted that the pressure differential across the transportation tank inlet aperture 34A and the vacuum pipe inlet aperture 46 is not great enough to suck the drill cuttings across the gap between these apertures. In this regard, when the drill cuttings 48 within the transportation tank 22 reach a certain level the transfer operation should be switched to another transportation tank (not shown) since if the transportation tank 22 is over filled, drill cuttings 48 would be more likely to enter the vacuum pipe 26, which is undesirable. When each transportation tank 22 on the vessel has been filled to the desired level, the transportation tank input pipe 24 is disconnected and the vessel may proceed to the onshore based processing/disposal facility.

The cone 40, 40A in the holding tank 14 and transportation tank 22 respectively serve to divide the drill cuttings 48 falling from the inlets 34, 34A between the chutes 36, 36A. The relatively small cross section of the plurality of chutes 36, 36A (when compared to the situation if only a single chute were located on the bottom of the tanks 14, 22) provide a number of smaller individual areas upon which the material above can press upon which makes hard packing of the drill cuttings located at the bottom of the tanks 14, 22 less likely.

When the transportation tanks 22 are to be emptied the remaining space within the top of the transportation tank 22 can be pressurised (while the discharge valves 38A are closed) either using an additional pressure source such as a pneumatic pump (not shown) or using the third vacuum unit 28 in the pump mode (and/or if it is available, the second unit 18, as will be described subsequently). This pressurised zone results in the contents of the transportation tank 22 being urged towards the bottom of the tank 22 in a similar fashion to that previously described for the holding tank 14. The discharge valves 38A on the bottom of the transportation tank 22 are then opened and the contents either removed simply due to the pressurisation in the transportation tank 22 or by attaching it to a further vacuum unit (not shown).

Modifications and improvements may be made to the embodiments hereinbefore described without departing from the scope of the invention.

For instance, although the embodiment of the apparatus 10 described above is used to transfer drill cuttings, the apparatus 10 may be used to transfer any material which will flow through a pipe, and is particularly useful for transporting materials which would otherwise tend to become stuck in pipes.

The vacuum units 12, 18 may be substituted with any vacuum unit, particularly those capable of both acting as a vacuum and as a pump without becoming clogged with the material passing though it. The vacuum unit 28 may be substituted by a unit capable of creating a powerful enough vacuum.

Furthermore, the second vacuum/pumping unit 18 could instead be situated on the supply vessel rather than on the drilling rig; in this case, the transfer pipe would be regarded as pipe 20 (suitably lengthened) and the pipe 24 would be suitably shortened.

## Claims

1. A method of transferring drill cuttings (48) into a first container (22) containing fluid from a second container (14) located upstream of the first container (22) comprising the steps of:-
increasing the pressure within the second container (14) such that the increased pressure applied upstream of the drill cuttings (48) acts on and expels the drill cuttings (48) within the second container (14) such that the drill cuttings (48) are pumped from the second container (14) through a first conduit (20; 24; 32A) and into the first container (22); and **characterised by**
substantially simultaneously at least partially evacuating fluid (50) from within the first container (22) in order to facilitate progression of the drill cuttings (48) from the second container (14) into the first container (22) and wherein the pressure applied to the second container (14) combined with evacuating the fluid (50) from the first container (22) provides a pressure differential across the drill cuttings (48) travelling along the length of the first conduit (20; 24; 32A).

2. A method according to claim 1, wherein the method further comprises the step of at least partially evacuating air (50) from the first container (22) along a second conduit (26) in order to substantially create a vacuum (50) within the first container (22).

3. A method according to any preceding claim, wherein the fluid (50) is at least partially evacuated from the first container (22) whilst substantially avoiding removal of the drill cuttings (48) from the first container (22).

4. A method according to any preceding claim, wherein the second upstream container (14) provides a temporary storage facility for drill cuttings (48) to be transported.

5. A method according to any preceding claim, wherein the step of pumping the drill cuttings (48) comprises pressurising the space above the drill cuttings (48) at the top of the second container (14) which results in all of the drill cuttings (48) within the second container (14) being urged toward the bottom of the second container (14) and into a discharge conduit (42) and subsequently into the first conduit (20; 24; 32A).

6. A method according to any preceding claim, wherein pressure is applied to the second container (14) and the drill cuttings (48) therein when the second container (14) contains a desired level of drill cuttings (48).

7. A method according to claim 6 when dependent upon claim 5, wherein the second container (14) is then emptied by evacuating at least a portion of the drill cuttings (48) within the second container (14), along the discharge conduit (42).

8. A method according to any preceding claim when dependent upon claim 7, wherein the action of evacuating at least a portion of the drill cuttings (48) along the discharge conduit (42) is assisted by the pressure applied to the second container (14).

9. A method according to either of claims 7 or 8, wherein the discharge conduit (42) is in fluid communication with the first conduit (20, 24, 32A) via an intermediate vacuum generation means (18) in order to allow the drill cuttings (48) from the second container (14) to be conveyed to the first container (22).

10. A method according to any preceding claim, wherein the first container (22) is located on a transportation means and the second container (14) is located proximal to a supply of the drill cuttings (48) from a primary drill cuttings source on a drilling rig.

11. A method according to claim 9 or to claim 10 when dependent upon claim 9, wherein the intermediate transfer vacuum generation means (18) is located proximal to and downstream of the second container (14).

12. A method according to claim 11, wherein a transfer conduit (24) connects the intermediate vacuum generation means (18) to the first container (22).

13. Drill cutting transfer apparatus (10) comprising:-
a first container (22) containing fluid;
a second container (14) which contains pressurised drill cuttings (48) and is located upstream from the first container (22);
a first conduit (20; 24; 32A) connecting the first container (22) and the second container (14);
drill cutting pumping means (12, 18) adapted to pressurise the drill cuttings (48) within the second container (14) such that the drill cuttings (48) are pumped from the second container (14) through the first conduit (20;
24; 32A) and into the first container (22);
and **characterised by** further comprising drill cutting urging means (28) adapted to facilitate transfer of the drill cuttings (48) from the second container (14) to the first container (22) by at least partially evacuating fluid (50) from within the first container (22) substantially simultaneously with the operation of the drill cutting pumping means (12, 18), such that the pressure applied to the second container (14) by the drill cutting pumping means (12, 18) simultaneously combined with evacuating the fluid (50) from the first container (22) provides a pressure differential across the drill cuttings (48) travelling along the length of the first conduit (20; 24; 32A).

14. Drill cutting transfer apparatus (10) according to claim 13, wherein the first conduit is a first tubular conduit (20, 24, 32A) which passes through an inlet portion (34A) of the first container (22) and an intermediate vacuum generation means (18) connected thereto.

15. Drill cutting transfer apparatus (10) according to claim 14, wherein the intermediate vacuum generation means (18) comprises a pump and a vacuum device and is adapted to be selectively switched between the pumping and vacuum producing modes as desired.

16. Drill cutting transfer apparatus (10) according to claim 15, wherein the intermediate vacuum generation means (18) also comprises an intermediate storage tank (30) and is located upstream of the first container (22).

17. Drill cutting transfer apparatus according to any of claims 13 to 16, wherein the drill cutting urging means (28) comprises a second tubular conduit (26) which passes through an outlet portion of the first container (22).

18. Drill cutting transfer apparatus (10) according to claim 17, wherein the drill cutting urging means (28) further comprises vacuum generation means (28) connected thereto.

19. Drill cutting transfer apparatus (10) according to either of claims 17 or 18 when dependent upon claim 14, wherein the inlet (34A) and outlet (46) portions are spaced apart across a diameter of the first container (22) in order to prevent drill cuttings (48) exiting the inlet portion (34A) from entering the outlet portion (46).

20. Drill cutting transfer apparatus (10) according to claim 19, wherein a filter is provided on the outlet portion (46) to further prevent the drill cuttings (48) from entering the outlet portion (46) and hence the vacuum generation means (28).

21. Drill cutting transfer apparatus (10) according to either of claims 19 or 20, wherein the inlet (34A) and outlet (46) portions are located toward the upper end of the first container (22).

22. Drill cutting transfer apparatus (10) according to any of claims 13 to 21, wherein the fluid is air (50) and wherein the drill cuttings (48) are a by-product of the hydrocarbon exploration and production industry.

23. Drill cutting transfer apparatus (10) according to claim 14 or to any of claims 15 to 22 when dependent upon claim 14, wherein the second container (14) is further located upstream from the intermediate vacuum generation means (18).

24. Drill cutting transfer apparatus (10) according to claim 23, wherein the connection (20; 24, 32A) between the first (22) and second (14) containers passes through at least a portion of the intermediate vacuum generation means (18).

25. Drill cutting transfer apparatus (10) according to any of claims 22 to 24, wherein the first (22) and second (14) containers are substantially cylindrical silo containers.

26. Drill cutting transfer apparatus (10) according to any of claims 13 to 25, wherein the or each container (14; 22) is provided with a plurality of circumferentially arranged drill cutting chutes (36), having a multi-sided cross section, adapted to substantially prevent the drill cuttings (48) within the or each container (14; 22) from becoming compacted such that the drill cuttings (48) will no longer flow.

27. Drill cutting transfer apparatus (10) according to claim 26, wherein a separation device (40) is provided adjacent the chutes (36) in order to substantially prevent large lumps of drill cuttings (48) from settling within the chutes (36).

## Patentansprüche

1. Ein Verfahren zum Transferieren von Bohrgut (48) in einen ersten, Fluid enthaltenden Behälter (22), aus einem zweiten Behälter (14), welcher sich stromaufwärts des ersten Behälters (22) befindet, beinhaltend die folgenden Schritte:
Erhöhen des Drucks innerhalb des zweiten Behälters (14), so dass der erhöhte Druck, der stromaufwärts des Bohrguts (48) angewendet wird, auf das Bohrgut (48) innerhalb des zweiten Behälters (14) wirkt und dieses ausstößt, so dass das Bohrgut (48) aus dem zweiten Behälter (14) durch eine erste Leitung (20; 24; 32A) und in den ersten Behälter (22) gepumpt wird; und durch Folgendes gekennzeichnet:
im Wesentlichen gleichzeitig mindestens teilweise das Entleeren von Fluid (50) aus dem ersten Behälter (22), um die Fortbewegung des Bohrguts (48) aus dem zweiten Behälter (14) in den ersten Behälter (22) zu erleichtern, und wobei der auf den zweiten Behälter (14) angewendete Druck zusammen mit dem Entleeren des Fluids (50) aus dem ersten Behälter (22) eine Druckdifferenz über das sich entlang der Länge der ersten Leitung (20; 24; 32A) bewegende Bohrgut (48) bereitstellt.

2. Verfahren gemäß Anspruch 1, wobei das Verfahren ferner folgenden Schritt beinhaltet:
mindestens teilweise das Entleeren von Luft (50) aus dem ersten Behälter (22) entlang einer zweiten Leitung (26), um in dem ersten Behälter (22) im Wesentlichen ein Vakuum (50) zu kreieren.

3. Verfahren gemäß einem der vorhergehenden Ansprüche, wobei das Fluid (50) mindestens teilweise aus dem ersten Behälter (22) entleert wird, während im Wesentlichen die Entfernung des Bohrguts (48) aus dem ersten Behälter (22) vermieden wird.

4. Verfahren gemäß einem der vorhergehenden Ansprüche, wobei der zweite, sich stromaufwärts befindliche Behälter (14) für zu transportierendes Bohrgut (48) eine temporäre Lagermöglichkeit bereitstellt.

5. Verfahren gemäß einem der vorhergehenden Ansprüche, wobei der Schritt des Pumpens des Bohrguts (48) das Unter-Druck-Setzen des Raums oberhalb des Bohrguts (48) an dem oberen Ende des zweiten Behälters (14) beinhaltet, was darin resultiert, dass das gesamte Bohrgut (48) innerhalb des zweiten Behälters (14) zum Boden des zweiten Behälters (14) und in eine Abführungsleitung (42) und anschließend in die erste Leitung (20; 24; 32A) gedrängt wird.

6. Verfahren gemäß einem der vorhergehenden Ansprüche, wobei auf den zweiten Behälter (14) und das Bohrgut (48) darin Druck angewendet wird, wenn der zweite Behälter (14) eine gewünschte Menge Bohrgut (48) enthält.

7. Verfahren gemäß Anspruch 6, wenn abhängig von Anspruch 5, wobei der zweite Behälter (14) dann durch Entleeren mindestens eines Teils des Bohrguts (48) in dem zweiten Behälter (14) entlang der Abführungsleitung (42) geleert wird.

8. Verfahren gemäß einem der vorhergehenden Ansprüche, wenn abhängig von Anspruch 7, wobei der Vorgang des Entleerens mindestens eines Teils des Bohrguts (48) entlang der Abführungsleitung (42) durch den auf den zweiten Behälter (14) angewendeten Druck unterstützt wird.

9. Verfahren gemäß entweder Anspruch 7 oder 8, wobei die Abführungsleitung (42) über ein dazwischenliegendes Vakuumerzeugungsmittel (18) mit der ersten Leitung (20, 24, 32A) in Fluidkommunikation ist, um zu ermöglichen, dass das Bohrgut (48) aus dem zweiten Behälter (14) in den ersten Behälter (22) befördert wird.

10. Verfahren gemäß einem der vorhergehenden Ansprüche, wobei sich der erste Behälter (22) auf einem Transportmittel befindet und sich der zweite Behälter (14) in der Nähe einer Zufuhr des Bohrguts (48) von einer primären Bohrgutquelle auf einer Bohranlage befindet.

11. Verfahren gemäß Anspruch 9 oder Anspruch 10, wenn abhängig von Anspruch 9, wobei sich das dazwischenliegende Transfervakuumerzeugungsmittel (18) in der Nähe und stromabwärts des zweiten Behälters (14) befindet.

12. Verfahren gemäß Anspruch 11, wobei eine Transferleitung (24) das dazwischenliegende Vakuumerzeugungsmittel (18) mit dem ersten Behälter (22) verbindet.

13. Eine Bohrguttransfervorrichtung (10), die Folgendes beinhaltet:
einen ersten, Fluid enthaltenden Behälter (22);
einen zweiten Behälter (14), der unter Druck stehendes Bohrgut (48) enthält und sich stromaufwärts des ersten Behälters (22) befindet;
eine erste Leitung (20; 24; 32A), die den ersten Behälter (22) und den zweiten Behälter (14) verbindet;
Bohrgutpumpmittel (12, 18), die zum Unter-Druck-Setzen des Bohrguts (48) in dem zweiten Behälter (14) angepasst sind, so dass das Bohrgut (48) aus dem zweiten Behälter (14) durch die erste Leitung (20; 24; 32A) und in den ersten Behälter (22) gepumpt wird;
und **dadurch gekennzeichnet ist, dass** sie ferner Folgendes beinhaltet: ein Bohrgutdrängmittel (28), das angepasst ist, um den Transfer des Bohrguts (48) aus dem zweiten Behälter (14) zu dem ersten Behälter (22) durch mindestens teilweise das Entleeren von Fluid (50) aus dem ersten Behälter (22) im Wesentlichen gleichzeitig zu dem Betrieb der Bohrgutpumpmittel (12, 18) zu erleichtern, so dass der durch die Bohrgutpumpmittel (12, 18) auf den zweiten Behälter (14) angewendete Druck, gleichzeitig zusammen mit dem Entleeren des Fluids (50) aus dem ersten Behälter (22), eine Druckdifferenz über das sich entlang der Länge der ersten Leitung (20; 24; 32A) bewegende Bohrgut (48) bereitstellt.

14. Bohrguttransfervorrichtung (10) gemäß Anspruch 13, wobei die erste Leitung eine erste röhrenförmige Leitung (20, 24, 32A) ist, die durch einen Einlassabschnitt (34A) des ersten Behälters (22) und ein damit verbundenes dazwischenliegendes Vakuumerzeugungsmittel (18) führt.

15. Bohrguttransfervorrichtung (10) gemäß Anspruch 14, wobei das dazwischenliegende Vakuumerzeugungsmittel (18) eine Pumpe und eine Vakuumeinrichtung beinhaltet und angepasst ist, um selektiv wie gewünscht zwischen dem Pumpmodus und dem vakuumproduzierenden Modus geschaltet zu werden.

16. Bohrguttransfervorrichtung (10) gemäß Anspruch 15, wobei das dazwischenliegende Vakuumerzeugungsmittel (18) auch einen dazwischenliegenden Lagerungstank (30) beinhaltet und sich stromaufwärts des ersten Behälters (22) befindet.

17. Bohrguttransfervorrichtung gemäß einem der Ansprüche 13 bis 16, wobei das Bohrgutdrängmittel (28) eine zweite röhrenförmige Leitung (26) beinhaltet, die durch einen Auslassabschnitt des ersten Behälters (22) führt.

18. Bohrguttransfervorrichtung (10) gemäß Anspruch 17, wobei das Bohrgutdrängmittel (28) ferner ein damit verbundenes Vakuumerzeugungsmittel (28) beinhaltet.

19. Bohrguttransfervorrichtung (10) gemäß entweder Anspruch 17 oder 18, wenn abhängig von Anspruch 14, wobei der Einlassabschnitt (34A) und der Auslassabschnitt (46) über einen Durchmesser des ersten Behälters (22) beabstandet sind, um zu verhindern, dass den Einlassabschnitt (34A) verlassendes Bohrgut (48) in den Auslassabschnitt (46) geht.

20. Bohrguttransfervorrichtung (10) gemäß Anspruch 19, wobei an dem Auslassabschnitt (46) ein Filter bereitgestellt ist, um ferner zu verhindern, dass das Bohrgut (48) in den Auslassabschnitt (46) und somit das Vakuumerzeugungsmittel (28) geht.

21. Bohrguttransfervorrichtung (10) gemäß entweder Anspruch 19 oder 20, wobei sich der Einlassabschnitt (34A) und der Auslassabschnitt (46) in Richtung des oberen Endes des ersten Behälters (22) befinden.

22. Bohrguttransfervorrichtung (10) gemäß einem der Ansprüche 13 bis 21, wobei das Fluid Luft (50) ist, und wobei das Bohrgut (48) ein Nebenprodukt der Kohlenwasserstoffexplorations- und -gewinnungsindustrie ist.

23. Bohrguttransfervorrichtung (10) gemäß Anspruch 14 oder gemäß einem der Ansprüche 15 bis 22, wenn abhängig von Anspruch 14, wobei sich ferner der zweite Behälter (14) stromaufwärts des dazwischenliegenden Vakuumerzeugungsmittels (18) befindet.

24. Bohrguttransfervorrichtung (10) gemäß Anspruch 23, wobei die Verbindung (20; 24; 32A) zwischen dem ersten (22) und dem zweiten (14) Behälter durch mindestens einen Abschnitt des dazwischenliegenden Vakuumerzeugungsmittels (18) führt.

25. Bohrguttransfervorrichtung (10) gemäß einem der Ansprüche 22 bis 24, wobei der erste (22) und der zweite (14) Behälter im Wesentlichen zylinderförmige Silobehälter sind.

26. Bohrguttransfervorrichtung (10) gemäß einem der Ansprüche 13 bis 25, wobei der oder jeder Behälter (14; 22) mit einer Vielzahl von im Umfang angeordneten Bohrgutrutschen (36) versehen ist, die einen mehrseitigen Querschnitt aufweisen, der angepasst ist, um im Wesentlichen zu verhindern, dass das Bohrgut (48) in dem oder jedem Behälter (14; 22) so komprimiert wird, dass das Bohrgut (48) nicht mehr strömt.

27. Bohrguttransfervorrichtung (10) gemäß Anspruch 26, wobei neben den Rutschen (36) eine Trenneinrichtung (40) bereitgestellt ist, um im Wesentlichen zu verhindern, dass sich große Klumpen von Bohrgut (48) innerhalb der Rutschen (36) absetzen.

## Revendications

1. Une méthode pour transférer des déblais de forage (48) dans un premier conteneur (22) contenant du fluide à partir d'un deuxième conteneur (14) situé en amont du premier conteneur (22) comprenant les étapes :
d'accroissement de la pression à l'intérieur du deuxième conteneur (14) de telle sorte que la pression accrue appliquée en amont des déblais de forage (48) agisse sur les déblais de forage (48) à l'intérieur du deuxième conteneur (14) et les expulse de telle sorte que les déblais de forage (48) soient pompés du deuxième conteneur (14) à travers une première conduite (20 ; 24 ; 32A) et jusque dans le premier conteneur (22) ; et **caractérisée par**
l'évacuation de façon au moins partielle substantiellement simultanée du fluide (50) de l'intérieur du premier conteneur (22) afin de faciliter la progression des déblais de forage (48) du deuxième conteneur (14) jusque dans le premier conteneur (22) et dans laquelle la pression appliquée sur le deuxième conteneur (14) combinée à l'évacuation du fluide (50) du premier conteneur (22) fournit une différence de pression de part et d'autre des déblais de forage (48) circulant sur la longueur de la première conduite (20 ; 24 ; 32A).

2. Une méthode selon la revendication 1, la méthode comprenant en sus l'étape d'évacuation de façon au moins partielle de l'air (50) du premier conteneur (22) le long d'une deuxième conduite (26) afin de créer substantiellement un vide (50) à l'intérieur du premier conteneur (22).

3. Une méthode selon n'importe quelle revendication précédente, dans laquelle le fluide (50) est évacué de façon au moins partielle du premier conteneur (22) tout en évitant substantiellement de retirer les déblais de forage (48) du premier conteneur (22).

4. Une méthode selon n'importe quelle revendication précédente, dans laquelle le deuxième conteneur (14) en amont fournit une installation de stockage temporaire pour les déblais de forage (48) devant être transportés.

5. Une méthode selon n'importe quelle revendication précédente, dans laquelle l'étape de pompage des déblais de forage (48) comprend la pressurisation de l'espace au-dessus des déblais de forage (48) dans le haut du deuxième conteneur (14) qui a pour résultat de pousser la totalité des déblais de forage (48) se trouvant à l'intérieur du deuxième conteneur (14) en direction du fond du deuxième conteneur (14) et jusque dans une conduite de décharge (42) et par la suite jusque dans la première conduite (20 ; 24 ; 32A).

6. Une méthode selon n'importe quelle revendication précédente, dans laquelle une pression est appliquée sur le deuxième conteneur (14) et les déblais de forage (48) s'y trouvant lorsque le deuxième conteneur (14) contient un niveau souhaité de déblais de forage (48).

7. Une méthode selon la revendication 6 lorsqu'elle dépend de la revendication 5, dans laquelle le deuxième conteneur (14) est ensuite vidé en évacuant au moins une partie des déblais de forage (48) se trouvant à l'intérieur du deuxième conteneur (14) le long de la conduite de décharge (42).

8. Une méthode selon n'importe quelle revendication précédente lorsqu'elle dépend de la revendication 7, dans laquelle l'action d'évacuer au moins une partie des déblais de forage (48) le long de la conduite de décharge (42) est favorisée par la pression appliquée sur le deuxième conteneur (14).

9. Une méthode selon l'une ou l'autre des revendications 7 et 8, dans laquelle la conduite de décharge (42) est en communication fluidique avec la première conduite (20, 24, 32A) par le biais d'un moyen de génération de vide intermédiaire (18) afin de permettre aux déblais de forage (48) provenant du deuxième conteneur (14) d'être acheminés vers le premier conteneur (22).

10. Une méthode selon n'importe quelle revendication précédente, dans laquelle le premier conteneur (22) est situé sur un moyen de transport et le deuxième conteneur (14) est situé de façon proximale à une alimentation en déblais de forage (48) provenant d'une source de déblais de forage primaire sur un équipement de forage.

11. Une méthode selon la revendication 9 ou la revendication 10 lorsqu'elle dépend de la revendication 9, dans laquelle le moyen de génération de vide intermédiaire de transfert (18) est situé de façon proximale au deuxième conteneur (14) et en aval de celui-ci.

12. Une méthode selon la revendication 11, dans laquelle une conduite de transfert (24) raccorde le moyen de génération de vide intermédiaire (18) au premier conteneur (22).

13. Appareil de transfert de déblais de forage (10) comprenant :
un premier conteneur (22) contenant du fluide ;
un deuxième conteneur (14) qui contient des déblais de forage (48) pressurisés et est situé en amont du premier conteneur (22) ;
une première conduite (20 ; 24 ; 32A) raccordant le premier conteneur (22) et le deuxième conteneur (14) ;
des moyens de pompage de déblais de forage (12, 18) conçus pour pressuriser les déblais de forage (48) se trouvant à l'intérieur du deuxième conteneur (14) de telle sorte que les déblais de forage (48) soient pompés du deuxième conteneur (14) à travers la première conduite (20 ; 24 ; 32A) et jusque dans le premier conteneur (22) ; et **caractérisé en ce qu'**il comprend en sus un moyen de poussée de déblais de forage (28) conçu pour faciliter le transfert des déblais de forage (48) du deuxième conteneur (14) vers le premier conteneur (22) en évacuant de façon au moins partielle le fluide (50) de l'intérieur du premier conteneur (22) substantiellement simultanément à l'opération des moyens de pompage de déblais de forage (12, 18), de telle sorte que la pression appliquée sur le deuxième conteneur (14) par les moyens de pompage de déblais de forage (12, 18) simultanément combinée à l'évacuation du fluide (50) du premier conteneur (22) fournit une différence de pression de part et d'autre des déblais de forage (48) circulant sur la longueur de la première conduite (20 ; 24 ; 32A).

14. Appareil de transfert de déblais de forage (10) selon la revendication 13, dans lequel la première conduite est une première conduite tubulaire (20, 24, 32A) qui passe à travers une portion d'entrée (34A) du premier conteneur (22) et un moyen de génération de vide intermédiaire (18) raccordé à celui-ci.

15. Appareil de transfert de déblais de forage (10) selon la revendication 14, dans lequel le moyen de génération de vide intermédiaire (18) comprend une pompe et un dispositif à vide et est conçu pour être commuté de façon sélective entre les modes pompage et production de vide comme souhaité.

16. Appareil de transfert de déblais de forage (10) selon la revendication 15, dans lequel le moyen de génération de vide intermédiaire (18) comprend aussi un réservoir de stockage intermédiaire (30) et est situé en amont du premier conteneur (22).

17. Appareil de transfert de déblais de forage selon n'importe lesquelles des revendications 13 à 16, dans lequel le moyen de poussée de déblais de forage (28) comprend une deuxième conduite tubulaire (26) qui passe à travers une portion de sortie du premier conteneur (22).

18. Appareil de transfert de déblais de forage (10) selon la revendication 17, dans lequel le moyen de poussée de déblais de forage (28) comprend en sus un moyen de génération de vide (28) raccordé à celui-ci.

19. Appareil de transfert de déblais de forage (10) selon l'une ou l'autre des revendications 17 et 18 lorsqu'elles dépendent de la revendication 14, dans lequel les portions d'entrée (34A) et de sortie (46) sont espacées sur un diamètre du premier conteneur (22) afin d'empêcher les déblais de forage (48) sortant de la portion d'entrée (34A) de pénétrer dans la portion de sortie (46).

20. Appareil de transfert de déblais de forage (10) selon la revendication 19, dans lequel un filtre est prévu sur la portion de sortie (46) pour empêcher plus avant les déblais de forage (48) de pénétrer dans la portion de sortie (46) et dès lors le moyen de génération de vide (28).

21. Appareil de transfert de déblais de forage (10) selon l'une ou l'autre des revendications 19 et 20, dans lequel les portions d'entrée (34A) et de sortie (46) sont situées vers l'extrémité supérieure du premier conteneur (22).

22. Appareil de transfert de déblais de forage (10) selon n'importe lesquelles des revendications 13 à 21, dans lequel le fluide est de l'air (50) et dans lequel les déblais de forage (48) sont un sous-produit de l'industrie d'exploration et de production d'hydrocarbures.

23. Appareil de transfert de déblais de forage (10) selon la revendication 14 ou n'importe lesquelles des revendications 15 à 22 lorsqu'elles dépendent de la revendication 14, dans lequel le deuxième conteneur (14) est en sus situé en amont du moyen de génération de vide intermédiaire (18).

24. Appareil de transfert de déblais de forage (10) selon la revendication 23, dans lequel le raccord (20 ; 24 ; 32A) entre les premier (22) et deuxième (14) conteneurs passe à travers au moins une portion du moyen de génération de vide intermédiaire (18).

25. Appareil de transfert de déblais de forage (10) selon n'importe lesquelles des revendications 22 à 24, dans lequel les premier (22) et deuxième (14) conteneurs sont des conteneurs silo substantiellement cylindriques.

26. Appareil de transfert de déblais de forage (10) selon n'importe lesquelles des revendications 13 à 25, dans lequel le ou chaque conteneur (14 ; 22) est muni d'une pluralité de goulottes (36) de déblais de forage arrangées de façon circonférentielle, présentant une section transversale à côtés multiples, conçues pour empêcher substantiellement les déblais de forage (48) se trouvant à l'intérieur du ou de chaque conteneur (14 ; 22) de se tasser de telle sorte que les déblais de forage (48) ne puissent plus s'écouler.

27. Appareil de transfert de déblais de forage (10) selon la revendication 26, dans lequel un dispositif de séparation (40) est prévu adjacent aux goulottes (36) afin d'empêcher substantiellement de gros morceaux de déblais de forage (48) de se déposer à l'intérieur des goulottes (36).
